# EUROPEAN PATENT SPECIFICATION

(11) **EP 0 991 040 B1**
(45) Date of publication and mention of the grant of the patent: **05.11.2008**
(21) Application number: 99117282.6
(22) Date of filing: 02.09.1999
(51) Int. Cl.: F16M 11/12, H04N 5/225

(54) **A scanning and cleaning device for an explosion-proof casing for monitoring apparatus, in particular for a surveillance television camera operating in an explosive environment**
Vorrichtung zur Abtastung und Reinigung eines explosionsgeschützten Gehäuses für einen Überwachungsapparat, insbesondere für eine Videokamera in einer explosionsgefährdeten Umgebung
Dispositif de balayage et de nettoyage d'un boîtier antidéflagrant pour appareil de surveillance, notamment pour une caméra vidéo dans un milieu explosible

(30) Priority: 04.09.1998 IT MI981968; 04.09.1998 IT MI980592 U
(43) Date of publication of application: 05.04.2000
(73) Proprietor: VIDEOTEC S.P.A., Schio (Vicenza) (IT)
(72) Inventor: STURIALE, Santi, 20090 CESANO BOSCONE (IT)
(74) Representative: Franzolin, Luigi

(56) References cited:
- EP-A- 0 415 891
- DE-U- 29 616 586
- US-A- 5 089 895
- US-A- 5 818 519

## Description

The present invention relates to explosion-proof scanning device for monitoring apparatus, in particular for a surveillance television camera operating in an industrial environment in the presence of explosive gases. The present invention further relates to a cleaning device for a window of an explosion-proof casing in which the television camera is enclosed.

The surveillance of industrial environments in which explosive gases are present requires the use of television cameras or other monitoring apparatus with particular constructional characteristics (explosion proofing) which, on the one hand ensures the operation thereof even in the case explosion and, on the other hand, avoids the risk that the apparatus itself will trigger an explosion in the environment (for example by creating sparks): clearly, in the most frequent cases, in which the use of movable monitoring apparatus is required (and in particular television cameras), which can be orientated to monitor different regions of the environment, the associated movement systems must also possess explosion-proof characteristics.

Document GB 2 075 114 discloses a bullet proof pan and tilt camera.

In particular, scanning devices for television cameras are known which allow displacement thereof in two planes (typically horizontal and vertical) with predetermined excursions: on a fixed support, for example secured to a wall bracket, there is rotatably mounted an intermediate unit to which, in turn, the body of the television camera is rotatably connected: within the intermediate unit are housed the drive means which allow rotation of the unit with respect to the support and rotation of the television camera with respect to the intermediate unit.

Clearly, scanning devices of this type require the presence of connection cables between the various movable components, which cables also serve, to supply the various components for control of the scanning and for control of the television camera: known scanning devices have in general the main disadvantage that these cables are disposed outside of the device and hang between the different parts in relative motion: consequently, not only are the cables exposed to the action of external agents (which may be aggressive, especially in some industrial environments), but, in the specific case of installations in an explosive environment, are also directly exposed to a possible explosion thereby constituting a point of weakness of the explosion-proof assembly.

On the other hand, housing the cables within the scanning device would, if known arrangements were used, require an unacceptable increase in the dimensions of the device itself and would in any event involve the further problem of avoiding twisting of the cables themselves during relative rotation of the different components of the device, with consequent wear and deterioration of the cables and possible compromise of the regular function of the television camera. Finally, these problems are aggravated by the fact that television cameras which operate in industrial environments in which explosive gases are present must be subject to safety rules which require that the television cameras themselves be sealed and isolated from the external environment within a sealed casing constructed in such a way that a possible explosion within the television camera cannot be transmitted to the external environment and vice versa. Obviously, the sealed casing is provided with a transparent window disposed in front of the lens of the television camera, but, because of the particular environment in which these television cameras operate, the protective window becomes dirty very quickly: in order not to prejudice the efficiency of the television camera it is thus necessary to provide for frequent manual cleaning of the window itself by means of an operator who, therefore, has to work in an extremely dangerous environment.

The object of the present invention is that of overcoming the disadvantages of the known devices described by providing, in particular, an explosion-proof scanning device which is simple and economic to construct, extremely compact and of small dimensions, which can remain operational for a long time without deterioration and is suitable for use in an explosive environment, and which allows the television camera to be enclosed within a sealed casing.

Another object of the invention is to provide an automatic cleaning device for the window of a casing which maintains the efficiency of the television camera for a long time without requiring manual interventions, being at the same time simple and economic to produce and not detrimental to the explosion-proof characteristics of the assembly.

In accordance with the above objects, there is provided an explosion-proof scanning device for monitoring apparatus, in particular for a television camera for surveying an explosive environment, comprising first and second bodies movable with respect to one another, first means for rotatably coupling the said first and second bodies, first drive means for relatively rotating one or the other of said first and second bodies about a first predetermined axis of rotation, and at least a first connection cable disposed for connection of the said first and second body; the device being characterised in that the said first rotatable coupling means are provided with a first internal housing for the passage of the said at least one connection cable, the said at least one connection cable being fitted within the said first internal housing seat passing substantially along the said first axis of rotation.

In particular, the said at least one first connection cable comprises a first deformable portion thereof, fitted in the said first internal housing, having a helical conformation with an axis substantially parallel to the said first axis of rotation; the said first deformable section being plastically deformable above a predetermined stress threshold to be pre-shaped in the said helical conformation, and being elastically deformable to unwind from the said helical conformation under a predetermined load, less than the said predetermined stress threshold, and to reassume the said helical conformation upon the release of the said predetermined load.

Further, there is provided a cleaning device for a window of an explosion-proof casing, in particular a casing containing the above mentioned television camera, as defined in Claim 18.

In this way the device according to the invention is free from external connection cables between the parts in relative motion: consequently, the cables are in general protected against the action of external agents and in particular from the effects of a possible explosion; the proposed arrangement of the invention, as well as being safer in the case of explosion, further simplifies the operations of installation and maintenance of the device itself: the particular and innovative arrangement of cables within the scanning device further avoids wear and twisting of the cables themselves during relative rotation of the different components of the device.

Moreover, a television camera housed in an explosion-proof casing as above can be provided with the cleaning device according to the present invention whilst maintaining its efficiency for a long time notwithstanding the particular environment in which it operates, thereby allowing frequent manual intervention for maintenance to be avoided.

Further characteristics and advantages of the invention will become clearer from the following description of exemplary embodiments which are absolutely non-limitative and given purely for the purposes of example, with reference to the Figures of the attached drawings, in which:
Figure 1 is a sectioned frontal view of a scanning device according to the invention;
Figure 2 is a partially sectioned side view of the device of Figure 1;
Figure 3 is a partially sectioned plan view of the device of Figure 1;
Figure 4 is a sectioned view of a cleaning device for a window of an explosion-proof casing, in particular a casing for containing a television camera, formed according to the invention;
Figure 5 is a view in section of a portion of the device of Figure 4.

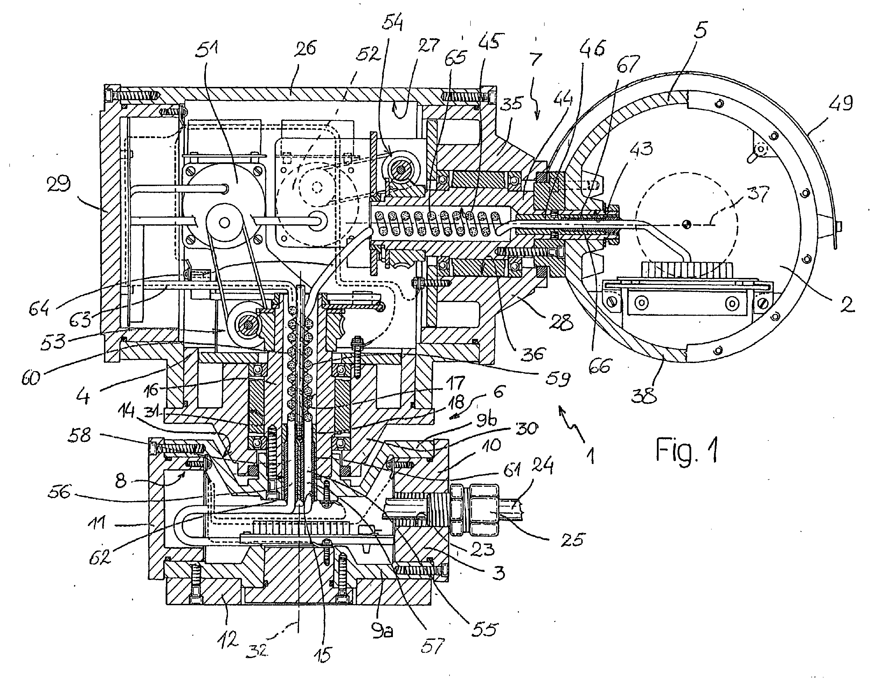

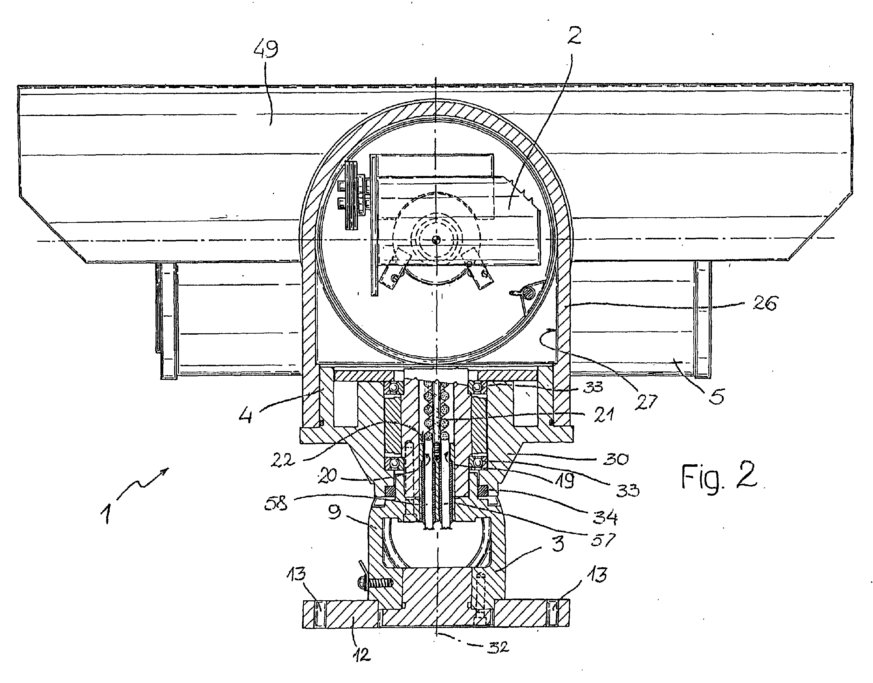

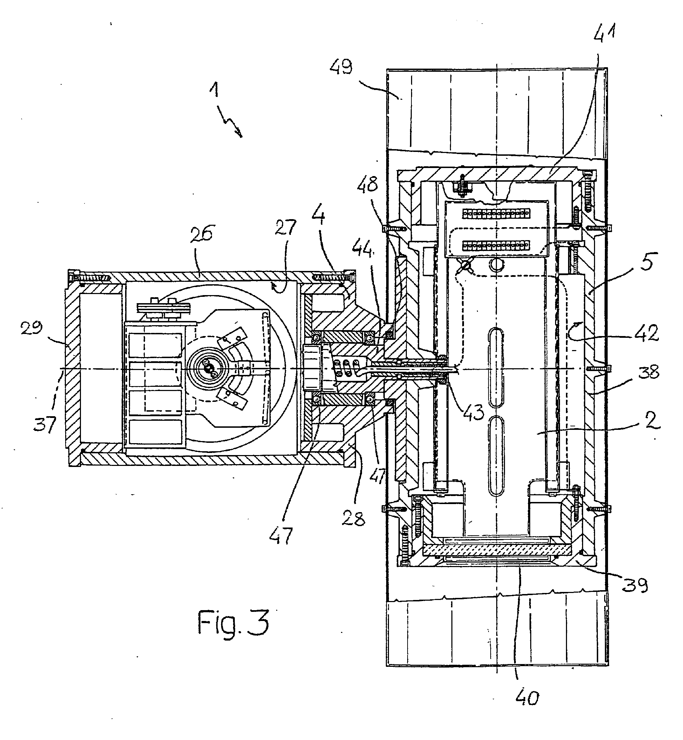

With reference to Figures 1 to 3, the reference numeral 1 generally indicates an explosion-proof scanning device for monitoring apparatus 2, in the specific example a surveillance television camera installed in an environment in which explosive gases are present. The device 1 comprises a first body 3, constituted by a fixed support, a second body 4 movable with respect to the fixed support 3, and a third body 5 constituted by a protective casing within which the television camera 2 is housed so as to be in turn movable with respect to the body 4; the device 1 further includes first rotatable coupling means 6 for coupling the body 4 to the support 3 and second rotatable coupling means 7 for coupling the body 4 to the casing 5.

The support 3 can be shaped in any manner and formed according to any known constructional or arrangements in such a way as to resist internal and external explosions of a predetermined magnitude (so as to comply with the regulations for explosion-proof apparatus): in the non-limitative specific example illustrated in Figures from 1 to 3 the support 3 is an internally hollow prismatic body provided with an hermetically closed interior cavity 8 de-limited by respective side walls 9 of the prismatic body 3 and closed, at respective opposite longitudinal ends, by two covers 10, 11; the support 3 is further provided with a base plate 12 fixed to a side wall 9a of the prismatic body constituting the support 3 and provided with fixing means 13 (for example through holes for associated screws) by means of which the support 3 can be secured, for example, to a wall bracket; a side wall 9b of the prismatic body constituting the support 3, opposite and facing the side wall 9a and the base plate 12, a frusto-conical cavity 14 at the centre of which is formed a circular aperture 14 passing through the side wall 9b and for communication with the interior cavity 8 of the support 3 itself. The support 3 further includes a tubular element 16 which extends orthogonally and projects from the side wall 9b on the opposite side from the internal cavity 8, in correspondence with the circular aperture 15: the circular aperture 15 and the tubular element 16 define a substantially cylindrical internal housing 17. Within the internal housing 17, in correspondence with the first longitudinal end thereof, there is fitted a tubular sleeve 18 constituted in the specific example by a solid cylinder provided with a pair of longitudinal through holes 19, 20 disposed diametrically opposite one another; a central pin 21 projects axially from a centre of an axial end surface 22 of the solid cylinder which constitutes the tubular sleeve 18 and the longitudinal through holes 19, 20 are disposed symmetrically with respect to this centre and offset from the central pin 21.

The support 3 is provided with a further hole 23 for access to its internal cavity 8, for example formed through the cover 10 of the support 3 itself (in the specific example substantially perpendicular to the base plate 12 and the side walls 9): through the hole 23 passes an output cable 24, fixed to the cover 10 in a known manner (for example by means of a threaded connector 25).

The body 4 may have any shape and is formed, again according to substantially known constructional arrangements, in such a way as to resist internal and external explosions of a predetermined magnitude (so as to comply with regulations for explosion-proof apparatus): in the specific example the body 4 comprises a substantially cylindrical internally hollow element 26 having an internal cavity 27 and closed at its respective opposite axial ends by two covers 28, 29 connected to the cylindrical element 26 in a known manner and hermetically sealed; the body 4 further includes a frusto-conical portion 30 projecting from an outer lateral surface of the cylindrical element 26 towards the support 3 and internally provided with a substantially cylindrical rotation seat 31, within which the tubular element of the support 3 can be inserted and forming part of first rotatable coupling means 6 which are able to allow relative rotation of the body 4 with respect to the support 3 about an axis of rotation 32 substantially coincident with a longitudinal axis of symmetry of the tubular element 16 and therefore of the internal housing 17; when the tubular element 16 is fitted into the associated rotation seat 31 the frusto conical portion 30 of the body 4 is housed in the frusto conical cavity 14 of the support 3: the first rotatable coupling means 6 further include a pair of bearings 33 of known type, for example rolling element bearings, radically interposed between an outer lateral surface of the tubular element 16 and an inner lateral surface of the rotation seat 31. The first rotatable coupling means 6 further include seal means 34, also substantially known, for ensuring the sealing coupling of the body 4 and the support 3, for example constituted by at least 1 sealing ring radically interposed between the tubular element 16 and the associated rotation seat 31.

In the non-limitative embodiment illustrated in Figures from 1 to 3 the body 4 includes a further frusto-conical portion 35 projecting from an outer surface of the cover 28 on the side opposite the internal cavity 27, in the direction of the body 5: the portion 35 is substantially orthogonal to the other frusto-conical portion 30 of the body 4 and internally similar to it, in particular being provided with a rotation seat 36, also substantially cylindrical, forming part of the second rotatable coupling means 7 of the body 4 and the body 5, which are able to allow relative rotation of this body 5 with respect to the body 4 about an axis of rotation 37 substantially orthogonal to the axis of rotation 32.

The body 5 is constituted by a casing, for example substantially cylindrical, comprising a side wall 38, a front wall 39 provided with a window 40 and a rear wall 41 opposite and facing the front wall 39: the casing 5 is also formed in a substantially known manner with explosion-proof characteristics, in particular as far as the connection of its side, front and rear walls are concerned: in an internal cavity 42 of the casing 5 is housed the television camera 2 (substantially known and not described in detail for simplicity). The side wall 38 is provided, for example in its central region, with a substantially circular radial aperture 43 for communication with the internal cavity 42: from a peripheral edge of the aperture 43 projects, radially in the direction of the body 4 and therefore on the opposite side from the internal cavity 42, a tubular element 44 fixedly connected to the casing 5 in a known manner and substantially similar to the previously described tubular element 16. In particular, the tubular element 40, together with the aperture 43, also defines internally a substantially cylindrical inner housing 45 at one longitudinal end of which there is fitted a tubular sleeve 46, in the specific example constituted by an internally hollow cylinder.

The second rotatable coupling means 7, as described with reference to the first rotatable coupling means 6, also comprise a pair of known bearings 47, for example rolling element bearings, radially interposed between an outer lateral surface of the tubular element 44 and an inner lateral surface of the rotation seat 36, and sealing means 48, also known, for ensuring sealing coupling of the body 4 and the body 5, for example constituted by at least one sealing ring radially interposed between the tubular element 44 and the associated rotation seat 36. Preferably, moreover, the casing 5 is provided with a substantially known semi-cylindrical screen 49 fixed above the casing 5 at a predetermined distance from the side wall 38.

The device 1 further includes first drive means 5 for rotating the body 4 with respect to the support 3 about the axis of rotation 32 and second drive means 52 for rotating the casing 5 with respect to the body 4 about the drive of rotation 37: both the drive means 51 and the drive means 52, which are substantially of known type, are housed in the internal cavity 42 within the body 4 and include respective toothed wheel and worm screw rotation systems 53, 54 (known and not illustrated in detail for simplicity).

A connection cable 55 is positioned for connection of the support 3, the body 4 and the body 5, whilst a connection cable 56 is positioned for connection of the support 3 and the body 4; within these connection cables 55, 56 can be both supply and control wiring for the drive means 51, 52 and control wiring for the television camera 2 (these being of any type) which enter in the internal cavity 8 of the support 3 through the output cable 24.

The connection cables 55, 56 comprise, starting from respective terminals housed within the internal cavity 8 of the support 3, respective substantially straight end sections 57, 58, and respective deformable sections 59, 60 having a helical conformation with an axis substantially parallel to the axis of rotation 32; each of the end sections 57, 58 passes through one of the longitudinal through holes 19, 22 of the tubular sleeve 18: the end sections 57, 58 are also at least partially embedded in respective sealing matrices 61, 62 which fill at least part of the respective longitudinal through holes 19, 20 and which form anchorage for these end sections 57, 58 to the tubular sleeve 18 and, therefore, to the support 3. It is clear however that this anchorage could be formed in a different manner from that indicated, in any known way.

The helical deformable sections 59, 60 of the connection cables 55, 56 extend out from the tubular sleeve 18 (and in particular from its longitudinal through holes 19, 20) into the internal housing 17 where they are both wound with alternate turns about the central pin 21; the deformable sections 59, 60 are plastically deformable above a predetermined stress threshold to be pre-shaped into their helical conformation of use, whilst they are elastically deformable to unwind from this helical conformation under a pre-determined load which is less than the predetermined stress threshold of plastic deformability, and able to reassume this helical shape when the applied load is released.

The connection cable 56 includes, after its helical deformable section 60, a further end section 63, possibly branched, which however terminates within the internal cavity 27 of the body 4, to be connected to the drive means 51, 52; on the other hand the connection cable 55 comprises, after its helical deformable section 59, a connection section 64 which traverses the internal cavity 27 of the body 4, and a further helical deformable section 65 the axis of which is substantially parallel to the axis of rotation 37 and fitted so as to pass through the internal housing 45 carried by the body 5. The deformable section 65 also has the same characteristics of deformability as the deformable sections 59, 60 which have been previously described, being in particular plastically deformable above a predetermined stress threshold to be pre-shaped into a helix, and being in use elastically deformable to unwind from its helical shape by applied loads less than this predetermined stress threshold, and to reassume its helical shape when the applied load is released.

The connection cable 55 also includes a further end section 66, opposite the end section 57 and consecutive to the deformable section 65, having a substantially straight shape and passing through the tubular sleeve 46 to which it is fixedly anchored, for example embedded in a sealing matrix 67 which at least partially fills the interior of this tubular sleeve 46. The end section 67 of the connection cable 55 then terminates within the internal cavity 42 of the casing 5 from where, for example, the control and supply cables for the television camera 2 lead.

During construction, therefore, the deformable sections 59, 60 and 65 of the connection cables 55, 56 are pre-shaped to their helical shape thanks to their plastic deformability; in use, when the body 4 rotates with respect to the support 3 and/or with respect to the casing 5 in a first sense of rotation the deformable sections 59, 60 and/or 65 of the connection cables 55, 56 are partially unwound from their helical shape to follow this rotation: when, on the other hand the body 4 turns with respect to the support 3 and/or the casing 5 in the opposite sense, the deformable sections 59, 60 and/or 65 rewind recovering their initial helical shape by virtue of their elastic deformability: for this purpose, clearly, the load which is applied to the deformable sections 59, 60, 65 during relative rotation of the bodies 3, 4, 5 must be less than the plastic deformability threshold of the connection cables 55, 56.

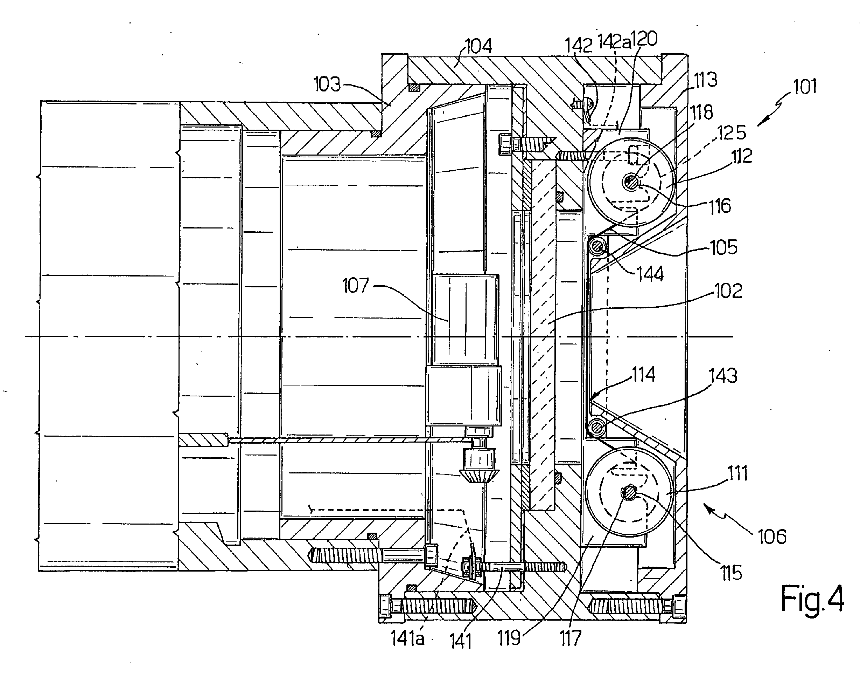

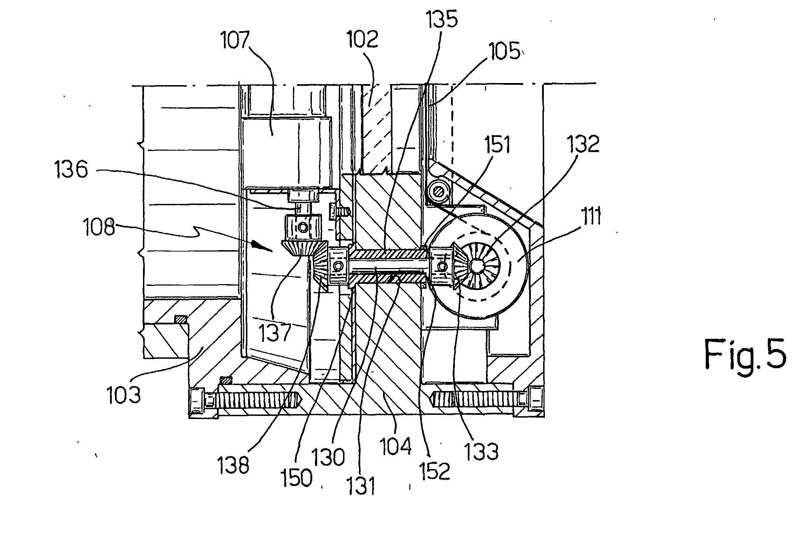

With reference now to Figures 4 and 5 the reference numeral 101 generally indicates a cleaning device for a transparent element 102 of an explosion-proof casing 103 which can be utilised as a variant in Figures 1, 2 and 3 for the body 5 to contain the television camera. The casing 103 is provided with a transparent element 102 on its wall 104 and is hermetically isolated from the external environment by means of the constructional arrangements described.

The device 101 comprises a transparent film 105, for example made of polymeric material, which is moveably disposed outside the casing 103 and transport means 106 for moving the film 105 along a predetermined path tangential to the transparent element 102 to carry the film 105 in front of this latter. The transport means 106 in turn comprise a motor 107 housed within the explosion proof casing 103 hermetically isolated from the external environment (in such a way that possible sparks generated by the motor 107 cannot be transmitted outside the casing 103 thereby triggering explosions) and transmission means 108 for transmitting motion from the motor 107 to the movable film 105.

In particular, the transport means 106 comprise a first drum 111 and a second drum 112 housed within a substantially annular hollow body 113, for example disposed outside the casing 103 and mechanically connected to the wall thereof in a non-movable manner (for example by means of screws) and provided with a through aperture 1 14 in correspondence with the transparent element of the casing 103.

The drums 111, 112 are fitted onto respective drive shafts 115, 116 which are rotatably mounted in a removal manner in respective rotation seats 117, 118: in the specific example the rotation seats 117, 118 are constituted by respective cavities formed in respective supports 119, 120 disposed within the hollow body 113, for example carried by the wall 104, within which the drive shafts 115, 116 are snap-engageable.

The film 5 is tensioned between the drums 111, 112 on which respective opposite ends of this film 105 are fixed, and covers the aperture 114 thereby preventing external contaminants from becoming deposited on the transparent element 102: in particular, a coil 125 of film 105 is wound on the drum 112 from which it can be unwound to be rewound onto the drum 111.

The transmission means 108 comprise a transmission shaft 130 rotatably lodged in an associated seat 131 passing through the wall of the casing 103, and a bevel gear 132, 133 for transferring drive from the transmission shaft 130 to the drum 111, in turn comprising a first bevel gear 132 fitted to the drive shaft 115 and a second bevel gear 133 fitted to the transmission shaft 130. As illustrated in particular in figure 5 the transmission shaft 130 is substantially orthogonal to the drive shaft 115 for the drum 111.

Within this seat 131, passing through the wall 104, there is a sleeve 135, coupled in a fluid-type sealing manner with the seat 131 to maintain the hermetic seal of the casing 103 notwithstanding the presence of the seat 131: the transmission shaft 130 is in turn fitted rotatably within the sleeve 135 without substantial play.

Preferably the motor 107 is disposed laterally with respect to the transparent element 102 and has its output shaft 136 substantially orthogonal to the transmission shaft 130 to which it transfers drive by means of a second bevel gear 137, 138.

Both the casing 103 and the hollow body 113 are provided with a earth connection; for example as illustrated in Figure 4, a first earth contact 141 extends from the wall 104 of the casing 103 and is connected to ground by known matter such as by a cable 141 a, whilst a second earth contact 142 extends from the wall 104 to the exterior of the hollow body 113 to be connected to this latter from within in any known manner not illustrated for simplicity, by means of a cable 142a.

The sealed fixing of the sleeve 135 into the seat 131 is obtained by axial engagement of a shoulder 150 of the sleeve 135 against the wall 104 and a circlip 151 fitted on the end of the sleeve 135 opposite the shoulder 150, which end is also provided with an annular seat 152 which extends within the seat 131 and is in use filled with sealing material to ensure that the explosion-proof sealing of the sleeve 135 through the wall 104.

The operation of the device 101 is as follows. When the film portion 105 of polymeric material which closes the aperture 114 and covers the transparent element 102 is dirty the motor 107 is actuated and thanks to the transmission means 108 drives the drum 111 to rotate; this latter is fitted to a first end of the film 105 and therefore also causes the drum 112 to rotate. The film 105 is thus unwound from the drum 112 and, possibly with the aid of return rollers 143, 114, follows the envisaged path passing tangentially to the transparent element 102 and then rewinding onto the drum 111. In this way the dirty potion of the film 105 is rewound onto the drum 111 and a new, clean, portion of the film 105 is brought to cover the transparent element 102 reinstating a high level of transparency.

Only when all the film 105 has been completely unwound from the drum 112 and rewound onto the drum 111 must an operator replace the used film 105 with a new one, for example by directly removing the rollers 111, 112 from the respective supports 119, 120 after having opened the hollow body 113.

## Claims

1. An explosion proofing scanning device (1) for a monitoring apparatus (2), e.g. a surveillance television camera (4), for explosive environments, which device, on the one hand ensures the operation thereof even in the case of an explosion and, on the other hand, avoids the risk to trigger an explosion in the environment, the device being orientable to monitor different regions of the environment comprising first and second bodies (3, 4) movable with respect to one another, first rotatable coupling means (6) for the said first and second bodies (3, 4), first drive means (51) for turning one of the said first and second bodies (3, 4) with respect to the other about a predetermined first axis of rotation (32) and at least one first connection cable (55, 56) for connecting the said first and second bodies (3, 4); wherein said first rotatable coupling means (6) are provided with a first housing (17) for the said at least one connection cable (55, 56) to pass through, the said at least one first connection cable (55, 56) passing into the said first internal housing (17) substantially along the said first axis of rotation (32); **characterized in that:**
(i)- said first and second bodies (3,4) are formed in such a way to resist internal and external explosions of a predetermined magnitude;
(ii)- said first housing (17) is defined by a tubular element (16) and a circular aperture (15) of said first body (3);
(iii)- said at least one connection cable (55, 56) comprises a first deformable section (59, 60) fitted in the said first internal housing seat (17) having a helical shape with an axis substantially parallel to the said first axis of rotation (35); the said first deformable section (59, 60) being plastically deformable above a predetermined stress threshold to be pre-shaped into the said helical shape, and being elastically deformable to unwind from the said helical shape under a predetermined load less than the predetermined stress threshold, and to reassume the said helical shape when the said predetermined load is released .

2. A device according to Claim 1, **characterised in that** the said first tubular element (16) is fixably carried by the said first body (3) and is rotatably coupled within a respective rotation seat (31) of the said second body (4); the said at least one hollow connection cable (55, 56) passing through the interior of the said first tubular element (16) into the said first internal housing (17).

3. A device according to Claim 2, **characterised in that** within the sai d first internal housing (17), defined by the said first tubular element (16), there is coaxially fitted, and fixed with respect to the said first tubular element (16), a first tubular sleeve (18), the said at least one first connection cable (55, 56) comprising a first end section (57, 58) of substantially elongate shape passing into the said first tubular sleeve (18); the said first helical section (59, 60) of the said at least one first connection cable (55, 56) being consecutive to the said first end section (57, 58) and extending out from the said first tubular sleeve (18) within the sai d first internal housing (17).

4. A device according to claim 3, **characterised in that** the said first end section (57, 58) of the said at least one connection cable (55, 56) is fixedly anchored to the first tubular sleeve (18) and thus, is fixed to the said first body (3).

5. A device according to any preceding claim 3 or 4, **characterised in that** the first end section (57, 58) of the said at least one first connection cable (55, 56) is embedded in a sealing matrix (61, 62) which at least partially fills the said first tubular sleeve (18).

6. A device according to the preceding claim, **characterised in that** it includes a pair of first connection cables (55, 56) for connection of the said first and second body (3, 4), the said first connection cables (55, 56) comprising respective first deformable sections (59, 60) fitted in the said first internal housing (17), having a helical shape the axis of which is substantially parallel to the said first axis of rotation (32), and respective first end sections (57, 58) of substantially elongate shape passing into the said first tubular sleeve (18); the said respective first deformable sections (59, 60) being plastically deformable above a predetermined stress threshold to be pre-shaped into the said helical shape, and being elastically deformable to unwind from the said helical shape under a predetermined load less than the said predetermined stress threshold and to reassume the said helical shape when the said predetermined load is released

7. A device according to Claim 6, **characterised in tha**t the said respective helically shaped deformable sections (59, 60) of the said connection cables (55, 56) are both wound with alternate turns about the same substantially cylindrical central pin (21), fitted coaxially in the first internal housing (17) and carried fixedly by the said first tubular sleeve (18).

8. A device according to the preceding claim, **characterised in that** the said first tubular sleeve (18) is a solid cylinder provided with a pair of respective longitudinal through holes (19, 20) for the insertion of the said first end sections (57, 58) of the said first connection cables (55, 56); the said respective longitudinally through holes (19, 20) being disposed diametrically opposite one another and being at least partially filled with respective sealing matrixes (61, 62) within which the said first end sections (57, 58) are embedded; the said central pin (21) extending axially and projecting from a centre of an axial end surface (22) of the said solid cylinder constituting the said first tubular sleeve (18), the said respective longitudinal through holes (19, 20) being disposed symmetrically with respect to the said centre, offset from the said central pin (21).

9. A device according to any preceding claim, **characterised in that** the first rotatable coupling means (6) include sealing means (31) for ensuring sealing coupling of the said first and second body (3, 4).

10. A device according to any preceding claim, **characterised in that** it further includes a third body (5) movable with respect to the said second body (4), second rotatable coupling means (7) for the said second and third body (4, 5), second drive means (52) for rotating the said third body (5) with respect to the said second body (4) about a second predetermined axis of rotation (37), and at least one second connection cable (55) for connecting the said second and third body (4, 5); the said second rotatable coupling means (7) being in turn provided with a second internal housing (45) for the introduction therethrough of the said at least one second connection cable (55), the said at least one second connection cable (55) passing through the said second internal housing (45) substantially along the second axis of rotation (37).

11. A device according to Claim 10, **characterised in that** the said at least one second connection cable (55) comprises a second deformable section (65) fitted in the said second internal housing (45) having a helical shape with an axis substantially parallel to the said second axis of rotation (37); the said second deformable section (65) of the said at least one second connection cable (55) being plastically deformable above a predetermined stress threshold to be pre-shaped into the said helical shape, and being elastically deformable to unwind from the said helical shape under a predetermined load less than the said predetermined stress threshold, and to reassume the said helical shape when the said predetermined bad is released.

12. A device according to Claim 11, **characterised in that** the said second rotatable coupling means (7) comprise a second tubular element (44) defining the interior of the said second internal housing (45); the said second tubular element (44) being carried fixedly by the said third body (5) and being rotatably coupled within a respective rotation seat (36) of the said second body (4); the said at least one second connection cable (55) passing through the interior of the said second tubular element (44) into the said second internal housing (45).

13. A device according to Claim 12, **characterised that** within the said second internal housing (45) defined by the said second tubular element (44), there is coaxially fitted and fixed to the said second tubular element (44) a second tubular sleeve (46), the said at least one second connection cable (55) comprising a second end section (66) of substantially elongate shape passing into the sai d second tubular sleeve (46) and fixedly anchored to it; the said second helically shaped deformable section (65) of the said at least one second connection cable (55) being consecutive to the said second end section (66) thereof and extending out from the said second tubular sleeve (46) into the said second internal housing (45).

14. A device according to any of Claims 10 to 13, **characterised in that** the said at least one second connection cable and the said at least one first connection cable constitute respective portions of the same continuous cable (55).

15. A device according to any of claims 10 to 14, **characterised in that** the said first and second axis of rotation (32, 37) are substantially orthogonal with respect to one another.

16. A device according to any of Claims from 10 to 15, **characterised in that** the said first and second drive means (51, 52) are housed within the said second body (4) and include respective toothed wheel and worm-screw rotation systems (53, 54) for moving the said second body (4) with respect to the said first body (3) and the said third body (5) with respect to the said second body (4) respectively.

17. A device according to any of claims from 10 to 16, **characterised in that** the said second rotatable coupling means (7) include sealing means (48) for ensuring sealing coupling of the said second and third body (4, 5).

18. A device according to any of claims from 10 to 17, **characterised in that** it includes a cleaning device (101) for a transparent element (102) of an explosion-proof casing constituted by the said third body (5;103) formed in such a way to resist internal and external explosions of a predetermined magnitude, **characterised in that** it comprises a transparent film (105) disposed movably outside the said casing (103) and movement means (106) for moving the said film (105) along a predetermined path to carry the said film (105) in front of the said transparent element (102) of the casing (103); the said transport means (106) comprising in turn drive means (107) housed within the said casing (103) and transmission means (108) for transmitting movement from the said drive means (107) to the said film (105), the said transmission means (108) being provided with sealing means (135) for hermetically sealing the said casing (103) from the exterior.

19. A device according to Claim 18, **characterised in that** the said transport means (106) comprise a first drum (111) about which the said film (105) is wound and a second drum (112) from which the said film (105) is unwound, respectively defining a final point and an initial point of the said path; the said transmission means (108) operating to transmit drive from the said drive means (107) to the said first drum (111) on which the said film (105) is wound.

20. A device according to Claim 19, **characterised in that** the said first and second drum (111, 112) are housed in a hollow body (113) disposed outside the said casing (103) and mechanically connected to it in a non-removable manner.

21. A device according to Claim 19 or 20, **characterised in that** the said transmission means (108) comprise a transmission shaft (130) rotatably housed within an associated seat passing through a wall of the said casing (103) and a bevel gear (132, 133) for transmitting drive from the said transmission shaft (130) to the said first drum (111).

22. A device according to Claim 21, **characterised in that** the said first drum (111) is fitted to a respective drive shaft (115); the said bevel gear comprising a first bevel wheel (32) fitted to the said drive shaft (115) and a second bevel wheel (113) fitted to the said transmission shaft (130).

23. A device according to Claim 21 or Claim 22, **characterised in that** the said seal means comprise a sleeve (135) fitted into the interior of the said seat (131), passing through the said wall (104) of the casing (103) and coupled in a fluid-tight sealing manner in the said seat (133); the said transmission shaft (130) being in turn fitted rotatably within the said sleeve (135).

24. A device according to any of Claims 19 to 23, **characterised in that** the said first and second drum (111, 112) are rotatably mounted on respective supports (119, 120) of the said hollow body (113); a coil (125) of the said film (105) being wound on the said second drum (112).

25. A device according to Claim 24, **characterised in that** the said first and second drum (111, 112) are fitted on respective drive shafts (115, 116) removably fitted to respective rotation seats (117, 118) formed on the said supports (119, 120).

26. A device according to any of Claims 18 to 25, **characterised in that** the said casing (103) and the said hollow body (113) are provided with earth connections (141, 142).

## Patentansprüche

1. Explosionsgeschützte Abtastvorrichtung (1) für eine Überwachungseinrichtung (2), z.B. eine Beobachtungskamera (4), für explosive Umgebungen, wobei die Vorrichtung auf der einen Seite die Funktionsfähigkeit der Kamera sogar im Falle einer Explosion sicherstellt und auf der anderen Seite das Risiko vermeidet, eine Explosion in der Umgebung auszulösen, wobei die Vorrichtung dazu ausrichtbar ist, verschiedene Bereiche der Umgebung zu überwachen, wobei die Vorrichtung einen ersten (3) und einen zweiten (4) Körper, die relativ zueinander bewegbar sind, erste rotierbare Kopplungsmittel (6) für den ersten (3) und den zweiten Körper (4), erste Antriebsmittel (51) zum Drehen von entweder dem ersten (3) oder dem zweiten (4) Körper relativ zu dem anderen um eine festgelegte erste Rotationsachse (32) und mindestens ein erstes Verbindungskabel (55, 56) zum Verbinden des ersten (3) und des zweiten (4) Körpers umfasst, wobei die ersten rotierbaren Kopplungsmittel (6) mit einem ersten Gehäuse (17) versehen sind, um das mindestens eine Verbindungskabel (55, 56) hindurchzuführen, wobei das mindestens eine erste Verbindungskabel (55, 56) in das erste interne Gehäuse (17) im wesentlichen entlang der ersten Rotationsachse (32) geführt ist, **dadurch gekennzeichnet, dass**
(i) der erste (3) und der zweite (4) Körper auf eine Weise ausgebildet sind, dass sie internen und externen Explosionen einer festgelegten Stärke widerstehen,
(ii) das erste Gehäuse (17) durch ein röhrenförmiges Element (16) und eine kreisförmige Aussparung (15) des ersten Körpers (3) definiert ist,
(iii) das mindestens eine Verbindungskabel (55, 56) einen ersten deformierbaren Abschnitt (59, 60) umfasst, der in den Sitz des ersten internen Gehäuses (17) eingepasst ist und eine Spiralform mit einer Achse im wesentlichen parallel zu der ersten Rotationsachse (35) aufweist, wobei der erste deformierbare Abschnitt (59, 60) über einen festgelegten Belastungsschwellwert hinaus plastisch deformierbar ist, um in die Spiralform vorgeformt zu werden, und elastisch deformierbar ist, um sich unter einer festgelegten Last, die geringer ist als der festgelegte Belastungsschwellwert, aus der Spiralform zu entwinden und die Spiralform wieder einzunehmen, wenn die festgelegte Last endet.

2. Vorrichtung nach Anspruch 1, **dadurch gekennzeichnet, dass** das erste röhrenförmige Element (16) fest durch den ersten Körper (3) getragen ist und rotierbar in einem entsprechenden Rotationssitz (31) des zweiten Körpers (4) gekoppelt ist, wobei das mindestens eine hohle Verbindungskabel (55, 56) durch den Innenraum des ersten röhrenförmigen Elements (16) in das erste interne Gehäuse (17) geführt ist.

3. Vorrichtung nach Anspruch 2, **dadurch gekennzeichnet, dass** innerhalb des ersten internen Gehäuses (17), das durch das erste röhrenförmige (16) definiert ist, eine koaxial eingepasste und relativ zu dem ersten röhrenförmigen Element (16) befestigte erste röhrenförmige Hülse (18) vorgesehen ist, wobei das mindestens eine erste Verbindungskabel (55, 56) einen ersten Endabschnitt (57, 58) von im wesentlichen länglicher Form umfasst, die in die erste röhrenförmige Hülse (18) geführt ist, wobei der erste spiralförmige Abschnitt (59, 60) des mindestens einen ersten Verbindungskabels (55, 56) auf den ersten Endabschnitt (57, 58) folgt und sich von der ersten röhrenförmigen Hülse (18) aus in das erste interne Gehäuse (17) erstreckt.

4. Vorrichtung nach Anspruch 3, **dadurch gekennzeichnet, dass** der erste Endabschnitt (57, 58) des mindestens einen Verbindungskabels (55, 56) fest an der ersten röhrenförmigen Hülse (18) verankert ist und daher an dem ersten Körper (3) befestigt ist.

5. Vorrichtung nach Anspruch 3 oder 4, **dadurch gekennzeichnet, dass** der erste Endabschnitt (57, 58) des mindestens einen ersten Verbindungskabels (55, 56) in eine Dichtungsmatrix (61, 62) eingebettet ist, die zumindest teilweise die erste röhrenförmige Hülse (18) ausfüllt.

6. Vorrichtung nach einem der voranstehenden Ansprüche, **dadurch gekennzeichnet, dass** sie ein Paar von ersten Verbindungskabeln (55, 56) zum Verbinden des ersten (3) und des zweiten (4) Körpers umfasst, wobei die ersten Verbindungskabel (55, 56) entsprechende erste deformierbare Abschnitte (59, 60), die in das erste interne Gehäuse (17) eingepasst sind, umfassen und eine Spiralform aufweisen, deren Achse im wesentlichen parallel zu der ersten Rotationsachse (32) ist, und wobei entsprechende Endabschnitte (57, 58) von im wesentlichen länglicher Form in die erste röhrenförmige Hülse (18) eingeführt sind, wobei entsprechende erste deformierbare Abschnitte (59, 60) über einen festgelegten Belastungsschwellwert hinaus plastisch deformierbar sind, um in die Spiralform vorgeformt zu werden, und elastisch deformierbar sind, um sich unter einer festgelegten Last, die geringer ist als der festgelegte Belastungsschwellwert, aus der Spiralform zu entwinden und die Spiralform wieder einzunehmen, wenn die festgelegte Last endet.

7. Vorrichtung nach Anspruch 6, **dadurch gekennzeichnet, dass** die entsprechenden spiralförmigen deformierbaren Abschnitte (59, 60) der Verbindungskabel (55, 56) beide mit alternierenden Windungen um denselben im wesentlichen zylindrischen Zentralstift (21) gewunden sind, koaxial in das erste interne (17) eingepasst sind und fest durch die erste röhrenförmige Hülse (18) getragen sind.

8. Vorrichtung nach einem der voranstehenden Ansprüche, **dadurch gekennzeichnet, dass** die erste röhrenförmige Hülse (18) ein massiver Zylinder ist, der mit einem Paar entsprechenden longitudinalen Durchgangslöchern (19, 20) zum Einführen der ersten Endabschnitte (57, 58) der ersten Verbindungskabel (55, 56) versehen ist, wobei die entsprechenden longitudinalen Durchgangslöcher (19, 20) diametral entgegengesetzt zueinander angeordnet sind und zumindest teilweise mit einer entsprechenden Dichtungsmatrix (61, 62) ausgefüllt sind, in der die ersten Endabschnitte (57, 58) eingebettet sind, wobei der Zentralstift (21) sich axial erstreckt und von einem Zentrum einer axialen Endfläche (22) des massiven Zylinders hervorragt, der die erste röhrenförmige Hülse (18) bildet, wobei die entsprechenden longitudinalen Durchgangslöcher (19, 20) symmetrisch relativ zu dem Zentrum und versetzt von dem Zentralstift (21) angeordnet sind.

9. Vorrichtung nach einem der voranstehenden Ansprüche, **dadurch gekennzeichnet, dass** die rotierbaren Kopplungsmittel (6) Dichtungsmittel (31) umfassen, um eine abdichtende Kopplung des ersten (3) und des zweiten (4) Körpers sicherzustellen.

10. Vorrichtung nach einem der voranstehenden Ansprüche, **dadurch gekennzeichnet, dass** die Vorrichtung des weiteren einen dritten Körper (5), der relativ zu dem zweiten Körper (4) bewegbar ist, zweite rotierbare Kopplungsmittel (7) für den zweiten (4) und den dritten (5) Körper, zweite Antriebsmittel (52) zum Rotieren des dritten Körpers (5) relativ zu dem zweiten Körper (4) um eine zweite festgelegte Rotationsachse (37) und mindestens ein zweites Verbindungskabel (55) zum Verbinden des zweiten (4) und des dritten (5) Körpers umfasst, wobei die zweiten rotierbaren Kopplungsmittel (7) wiederum mit einem zweiten internen Gehäuse (45) versehen sind, um durch dieses das mindestens eine zweite Verbindungskabel (55) einzuführen, wobei das mindestens eine zweite Verbindungskabel (55) durch das zweite interne Gehäuse (45) im wesentlichen entlang der zweiten Rotationsachse (37) tritt.

11. Vorrichtung nach Anspruch 10, **dadurch gekennzeichnet, dass** das mindestens eine zweite Verbindungskabel (55) einen zweiten deformierbaren Abschnitt (65) umfasst, der in das zweite interne Gehäuse (45) eingepasst ist und eine Spiralform mit einer Achse im wesentlichen parallel zu der zweiten Rotationsachse (37) aufweist, wobei der zweite deformierbare Abschnitt (65) des mindestens einen zweiten Verbindungskabels (55) über einem festegelegten Belastungsschwellwert plastisch deformierbar ist, um in die Spiralform vorgeformt zu werden, und elastisch deformierbar ist, um sich aus der Spiralform bei einer festgelegten Last, die geringer als der festgelegte Belastungsschwellwert ist, zu entwinden und um die Spiralform wieder einzunehmen, wenn die festgelegte Last endet.

12. Vorrichtung nach Anspruch 11, **dadurch gekennzeichnet, dass** die zweiten rotierbaren Kopplungsmittel (7) ein zweites röhrenförmiges Element (44) umfassen, das den Innenraum des zweiten internen Gehäuses (45) definiert, wobei das zweite röhrenförmige Element (44) fest durch den dritten Körper (5) getragen ist und rotierbar in einen entsprechenden Rotationssitz (36) des zweiten Körpers (4) gekoppelt ist, wobei das mindestens eine zweite Verbindungskabel (55) durch den Innenraum des zweiten röhrenförmigen Elements (44) in das zweite interne Gehäuse (45) tritt.

13. Vorrichtung nach Anspruch 12, **dadurch gekennzeichnet, dass** innerhalb des zweiten internen Gehäuses (45), das durch das zweite röhrenförmige Element (44) definiert ist, eine koaxial eingepasste und an dem zweiten röhrenförmigen Element (44) befestigte zweite röhrenförmige Hülse (46) vorgesehen ist, wobei das mindestens eine zweite Verbindungskabel (55) einen zweiten Endabschnitt (66) von im wesentlichen länglicher Form umfasst, der in die zweite röhrenförmige Hülse (46) geführt ist und fest an dieser verankert ist, wobei der zweite spiralförmige deformierbare Abschnitt (65) des mindestens einen zweiten Verbindungskabels (55) auf den zweiten Endabschnitt (66) folgt und sich von der zweiten röhrenförmigen Hülse (46) aus in das zweite interne Gehäuse (45) erstreckt.

14. Vorrichtung nach einem der Ansprüche 10 bis 13, **dadurch gekennzeichnet, dass** das mindestens eine zweite Verbindungskabel und das mindestens eine erste Verbindungskabel entsprechende Abschnitte desselben durchgängigen Kabels (55) ausbilden.

15. Vorrichtung nach einem der Ansprüche 10 bis 14, **dadurch gekennzeichnet, dass** die erste (32) und die zweite (37) Rotationsachse im wesentlichen orthogonal zueinander sind.

16. Vorrichtung nach einem der Ansprüche 10 bis 15, **dadurch gekennzeichnet, dass** die ersten (51) und die zweiten (52) Antriebsmittel innerhalb des zweiten Körpers (4) beherbergt sind und entsprechende Zahnrad- und Spiralschraubenrotationssysteme (53, 54) zum Bewegen des zweiten Körpers (4) relativ zu dem ersten Körper (3) bzw. des dritten Körpers (5) relativ zu dem zweiten Körper (4) umfassen.

17. Vorrichtung nach einem der Ansprüche 10 bis 16, **dadurch gekennzeichnet, dass** die zweiten rotierbaren Kopplungsmittel (7) Dichtungsmittel (48) zum Sicherstellen einer abdichtenden Kopplung des zweiten (4) und des dritten (5) Körpers umfassen.

18. Vorrichtung nach einem der Ansprüche 10 bis 17, **dadurch gekennzeichnet, dass** die Vorrichtung eine Reinigungsvorrichtung (101) für ein transparentes Element (102) eines explosionsgeschützten Gehäuses umfasst, das durch den dritten Körper (5, 103) gebildet ist, der auf eine Weise ausgebildet ist, dass er internen und externen Explosionen einer bestimmten Stärke widersteht, **dadurch gekennzeichnet, dass** die Vorrichtung eine transparente Folie (105) umfasst, die bewegbar außerhalb des Gehäuses (103) angeordnet ist und Bewegungsmittel (106) zum Bewegen der Folie (105) entlang eines festgelegten Wegs umfasst, um die Folie (105) vor das transparente Element (102) des Gehäuses (103) zu fördern, wobei das Transportmittel (106) wiederum Antriebsmittel (107) umfasst, die innerhalb des Gehäuses (103) beherbergt sind und Übersetzungsmittel (108) zum Übersetzen einer Bewegung von dem Antriebsmittel (107) auf die Folie (105) umfasst, wobei das Übersetzungsmittel (108) mit Dichtungsmitteln (135) zum hermetischen Abdichten des Gehäuses (103) gegenüber der Außenumgebung versehen ist.

19. Vorrichtung nach Anspruch 18, **dadurch gekennzeichnet, dass** die Transportmittel (106) eine erste Trommel (111), um die die Folie (105) gewunden ist, und eine zweite Trommel (112) umfassen, von der die Folie (105) abgewickelt ist, wobei entsprechend ein Endpunkt und ein Anfangspunkt des Wegs definiert ist, wobei die Übersetzungsmittel (108) dazu betrieben werden, einen Antrieb von den Antriebsmitteln (107) auf die erste Trommel (111), auf die die Folie (105) gewunden ist, zu übersetzen.

20. Vorrichtung nach Anspruch 19, **dadurch gekennzeichnet, dass** die erste (111) und die zweite (112) Trommel in einem hohlen Körper (113) beherbergt sind, der außerhalb des Gehäuses (103) angeordnet ist und mit dem Gehäuse mechanisch auf nicht entfernbare Weise verbunden ist.

21. Vorrichtung nach Anspruch 19 oder 20, **dadurch gekennzeichnet, dass** die Übersetzungsmittel (108) eine Übersetzungswelle (130), die rotierbar in einem verknüpften Sitz beherbergt ist, der durch eine Wand des Gehäuses (103) geführt ist, und ein Kegelradgetriebe (132, 133) zum Übersetzen eines Antriebs der Übersetzungswelle (130) auf die erste Trommel (111) umfassen.

22. Vorrichtung nach Anspruch 21, **dadurch gekennzeichnet, dass** die erste Trommel (111) an eine entsprechende Antriebswelle (115) angepasst ist, wobei das Kegelradgetriebe ein erstes Kegelrad (32) umfasst, das an die Antriebswelle (115) angepasst ist, und ein zweites Kegelrad (113) umfasst, das an die Übersetzungswelle (130) angepasst ist.

23. Vorrichtung nach Anspruch 21 oder 22, **dadurch gekennzeichnet, dass** die Dichtungsmittel eine Hülse (135) umfassen, die in den Innenraum des Sitzes (131) eingepasst ist und die durch die Wand (104) des Gehäuses (103) geführt ist und nach Art einer fluiddichten Dichtung in den Sitz (131) gekoppelt ist, wobei die Übersetzungswelle (130) wiederum rotierbar in die Hülse (135) eingepasst ist.

24. Vorrichtung nach einem der Ansprüche 19 bis 23, **dadurch gekennzeichnet, dass** die erste (111) und die zweite (112) Trommel rotierbar auf entsprechenden Stützelementen (119, 120) des hohlen Körpers (113) montiert sind, wobei eine Wicklung (125) der Folie (105) auf die zweite Trommel (112) gewunden ist.

25. Vorrichtung nach Anspruch 24, **dadurch gekennzeichnet, dass** die erste (111) und die zweite (112) Trommel an entsprechende Antriebswellen (115, 116) angepasst sind, die entfernbar an entsprechende Rotationssitze (117, 118) angepasst sind, die an den entsprechenden Stützelementen (119, 120) ausgebildet sind.

26. Vorrichtung nach einem der Ansprüche 18 bis 25, **dadurch gekennzeichnet, dass** das Gehäuse (103) und der hohle Körper (113) mit Erdungen (141, 142) versehen sind.

## Revendications

1. Dispositif (1) de balayage à l'épreuve des explosions pour un appareil (2) de contrôle, par exemple une caméra (4) de télévision de surveillance, pour des environnements explosifs, lequel dispositif, d'une part, assure son fonctionnement même dans le cas d'une explosion et, d'autre part, évite le risque de déclenchement d'une explosion dans l'environnement, le dispositif étant orientable pour contrôler différentes régions de l'environnement, comportant des premier et second corps (3, 4) mobiles l'un par rapport à l'autre, des premiers moyens d'accouplement rotatifs (6) pour lesdits premier et second corps (3, 4), des premiers moyens d'entraînement (51) pour faire tourner l'un desdits premier et second corps (3, 4) par rapport à l'autre autour d'un premier axe prédéterminé de rotation (32) et au moins un premier câble de connexion (55, 56) destiné à connecter lesdits premier et second corps (3, 4) ; dans lequel lesdits premiers moyens rotatifs d'accouplement (6) sont pourvus d'un premier boîtier (17) pour le passage à travers lui dudit au moins un câble de connexion (55, 56), ledit au moins un premier câble de connexion (55, 56) pénétrant dans ledit premier boîtier intérieur (17) sensiblement le long dudit premier axe de rotation (32) ; **caractérisé en ce que :**
(i)- lesdits premier et second corps (3, 4) sont formés d'une manière telle qu'ils résistent à des explosions internes et externes d'une amplitude prédéterminée ;
(ii)- ledit premier boîtier (17) est défini par un élément tubulaire (16) et une ouverture circulaire (15) dudit premier corps (3) ;
(iii)- ledit au moins un câble de connexion (55, 56) comporte une première section déformable (59, 60) ajustée dans ledit premier siège de boîtier intérieur (17) ayant une forme hélicoïdale avec un axe sensiblement parallèle audit premier axe de rotation (35) ; ladite première section déformable (59, 60) pouvant être déformée plastiquement au-delà d'un seuil de contrainte prédéterminé pour être préformée en ladite forme hélicoïdale, et pouvant être déformée élastiquement pour se dérouler depuis ladite forme hélicoïdale sous une charge prédéterminée inférieure au seuil de contrainte prédéterminé, et pour reprendre ladite forme hélicoïdale lorsque ladite charge prédéterminée est relâchée.

2. Dispositif selon la revendication 1, **caractérisé en ce que** ledit premier élément tubulaire (16) est porté fixement par ledit premier corps (3) et est accouplé en rotation à l'intérieur d'un siège respectif (31) de rotation dudit second corps (4) ; ledit au moins un câble creux de connexion (55, 56) passant à travers l'intérieur dudit premier élément tubulaire (16) pour entrer dans ledit premier boîtier intérieur (17).

3. Dispositif selon la revendication 2, **caractérisé en ce que,** à l'intérieur dudit premier boîtier intérieur (17), défini par ledit premier élément tubulaire (16), il y a un premier manchon tubulaire (18) ajusté coaxialement et fixe par rapport audit premier élément tubulaire (16), ledit au moins un premier câble de connexion (55, 56) comportant une première section extrême (57, 58) de forme sensiblement allongée pénétrant dans ledit premier manchon tubulaire (18) ; ladite première section hélicoïdale (59, 60) dudit au moins un premier câble de connexion (55, 56) étant consécutive à ladite première section extrême (57, 58) et s'étendant vers l'extérieur depuis ledit premier manchon tubulaire (18) à l'intérieur dudit premier boîtier intérieur (17).

4. Dispositif selon la revendication 3, **caractérisé en ce que** ladite première section extrême (57, 58) dudit au moins un câble de connexion (55, 56) est ancrée fixement au premier manchon tubulaire (18) et est donc fixée audit premier corps (3).

5. Dispositif selon l'une des revendications 3 et 4, **caractérisé en ce que** la première section extrême (57, 58) dudit au moins un premier câble de connexion (55, 56) est noyée dans une matrice de scellement (61, 62) qui remplit au moins partiellement ledit premier manchon tubulaire (18).

6. Dispositif selon la revendication précédente, **caractérisé en ce qu'**il comprend une paire de premiers câbles de connexion (55, 56) pour une connexion desdits premier et second corps (3, 4), lesdits premiers câbles de connexion (55, 56) comportant des premières sections déformables respectives (59, 60) ajustées dans ledit premier boîtier intérieur (17), ayant une forme hélicoïdale dont l'axe est sensiblement parallèle audit premier axe de rotation (32), et des premières sections extrêmes respectives (57, 58) de forme sensiblement allongée pénétrant dans ledit premier manchon tubulaire (18) ; lesdites premières sections déformables respectives (59, 60) pouvant être déformées plastiquement au-delà d'un seuil de contrainte prédéterminé pour être préformées en ladite forme hélicoïdale, et pouvant être déformées élastiquement pour se dérouler à partir de ladite forme hélicoïdale sous une charge prédéterminée inférieure audit seuil de contrainte prédéterminé et pour reprendre ladite forme hélicoïdale lorsque ladite charge prédéterminée est relâchée.

7. Dispositif selon la revendication 6, **caractérisé en ce que** lesdites sections déformables respectives (59, 60) mises en forme d'hélice desdits câbles de connexion (55, 56) sont toutes deux enroulées avec des spires alternées autour de la même broche centrale sensiblement cylindrique (21), logée coaxialement dans le premier boîtier intérieur (17) et portée fixement par ledit premier manchon tubulaire (18).

8. Dispositif selon la revendication précédente, **caractérisé en ce que** ledit premier manchon tubulaire (18) est un cylindre plein pourvu d'une paire de trous traversants longitudinaux respectifs (19, 20) pour l'insertion desdites premières sections extrêmes (57, 58) desdits premiers câbles de connexion (55, 56) ; lesdits trous traversants longitudinalement respectifs (19, 20) étant disposés de façon à être diamétralement opposés l'un à l'autre et étant au moins partiellement remplis de matrices de scellement respectives (61, 62) à l'intérieur desquelles lesdites premières sections extrêmes (57, 58) sont noyées ; ladite broche centrale (21) s'étendant axialement et faisant saillie depuis un centre d'une surface extrême axiale (22) dudit cylindre plein constituant ledit premier manchon tubulaire (18), lesdits trous traversants longitudinaux respectifs (19, 20) étant disposés symétriquement par rapport audit centre, en décalage de ladite broche centrale (21).

9. Dispositif selon l'une quelconque des revendications précédentes, **caractérisé en ce que** les premiers moyens rotatifs d'accouplement (6) comprennent des moyens d'étanchéité (31) pour assurer un couplage étanche desdits premier et second corps (3, 4).

10. Dispositif selon l'une quelconque des revendications précédentes, **caractérisé en ce qu'**il comporte en outre un troisième corps (5) mobile par rapport audit deuxième corps (4), des seconds moyens rotatifs d'accouplement (7) pour lesdits deuxième et troisième corps (4, 5), des seconds moyens d'entraînement (52) pour faire tourner ledit troisième corps (5) par rapport audit deuxième corps (4) autour d'un second axe prédéterminé de rotation (37) et au moins un second câble de connexion (55) pour connecter lesdits deuxième et troisième corps (4, 5) ; lesdits seconds moyens rotatifs d'accouplement (7) étant eux-mêmes pourvus d'un second boîtier intérieur (45) pour l'introduction à travers celui-ci dudit au moins un second câble de connexion (55), ledit au moins second câble de connexion (55) passant à travers ledit second boîtier intérieur (45) sensiblement suivant le second axe de rotation (37).

11. Dispositif selon la revendication 10, **caractérisé en ce que** ledit au moins un second câble de connexion (55) comporte une seconde section déformable (65) ajustée dans ledit second boîtier intérieur (45) ayant une forme hélicoïdale avec un axe sensiblement parallèle audit second axe de rotation (37) ; ladite seconde section déformable (65) dudit au moins un second câble de connexion (55) pouvant être déformés plastiquement au-delà d'un seuil de contrainte prédéterminé pour être préformée en ladite forme hélicoïdale, et pouvant être déformée élastiquement pour se dérouler à partir de ladite forme hélicoïdale sous une charge prédéterminée inférieure audit seuil de contrainte prédéterminé, et pour reprendre ladite forme hélicoïdale lorsque ladite charge prédéterminée est relâchée.

12. Dispositif selon la revendication 11, **caractérisé en ce que** lesdits seconds moyens rotatifs d'accouplement (7) comprennent un second élément tubulaire (44) définissant l'intérieur dudit second boîtier intérieur (45) ; ledit second élément tubulaire (44) étant porté fixement par ledit troisième corps (5) et étant accouplé en rotation à l'intérieur d'un siège respectif de rotation (36) dudit deuxième corps (4) ; ledit au moins un second câble de connexion (55) passant à travers l'intérieur dudit second élément tubulaire (44) jusque dans ledit second boîtier intérieur (45).

13. Dispositif selon la revendication 12, **caractérisé en ce que,** à l'intérieur dudit second boîtier intérieur (45) défini par ledit second élément tubulaire (44), il y a un second manchon tubulaire (46) ajusté coaxialement et fixé audit second élément tubulaire (44), ledit au moins un second câble de connexion (55) comportant une seconde section extrême (66) de forme sensiblement allongée pénétrant dans ledit second manchon tubulaire (46) et ancrée fixement à celui-ci ; ladite seconde section déformable (65), formée en hélice, dudit au moins un second câble de connexion (55) étant consécutive à ladite seconde section extrême (66) de celui-ci et s'étendant vers l'extérieur depuis ledit second manchon tubulaire (46) pour entrer dans ledit second boîtier intérieur (45).

14. Dispositif selon l'une quelconque des revendications 10 à 13, **caractérisé en ce que** ledit au moins un second câble de connexion et ledit au moins un premier câble de connexion constituent des parties respectives du même câble continu (55).

15. Dispositif selon l'une quelconque des revendications 10 à 14, **caractérisé en ce que** lesdits premier et second axes de rotation (32, 37) sont sensiblement orthogonaux entre eux.

16. Dispositif selon l'une quelconque des revendications 10 à 15, **caractérisé en ce que** lesdits premiers et seconds moyens d'entraînement (51, 52) sont logés dans ledit second corps (4) et comprennent des systèmes respectifs de rotation à roue dentée et vis sans fin (53, 54) pour déplacer ledit deuxième corps (4) par rapport audit premier corps (3) et ledit troisième corps (5) par rapport audit deuxième corps (4), respectivement.

17. Dispositif selon l'une quelconque des revendications 10 à 16, **caractérisé en ce que** lesdits seconds moyens rotatifs d'accouplement (7) comprennent des moyens d'étanchéité (48) pour assurer un accouplement étanche desdits deuxième et troisième corps (4, 5).

18. Dispositif selon l'une quelconque des revendications 10 à 17, **caractérisé en ce qu'**il comporte un dispositif de nettoyage (101) pour un élément transparent (102) d'un carter à l'épreuve des explosions constitué par ledit troisième corps (5 ; 103) formé d'une manière telle qu'il résiste à des explosions internes et externes d'une amplitude prédéterminée, **caractérisé en ce qu'**il comporte un film transparent (105) disposé de façon mobile à l'extérieur dudit carter (103) et des moyens de déplacement (106) destinés à déplacer ledit film (105) le long d'un chemin prédéterminé pour transporter ledit film (105) en avant dudit élément transparent (102) du carter (103) ; lesdits moyens de transport (106) comportant, eux-mêmes, des moyens d'entraînement (107) logés à l'intérieur dudit carter (103) et des moyens de transmission (108) pour transmettre un mouvement desdits moyens d'entraînement (107) audit film (105), lesdits moyens de transmission (108) étant pourvus de moyens d'étanchéité (135) pour sceller hermétiquement ledit carter (103) par rapport à l'extérieur.

19. Dispositif selon la revendication 18, **caractérisé en ce que** lesdits moyens de transport (106) comprennent un premier tambour (111) autour duquel ledit film (105) est enroulé et un second tambour (112) duquel ledit film (105) est déroulé, définissant respectivement un point final et un point initial dudit chemin ; lesdits moyens de transmission (108) fonctionnant de façon à transmettre une force d'entraînement depuis lesdits moyens d'entraînement (107) audit premier tambour (111) sur lequel ledit film (105) est enroulé.

20. Dispositif selon la revendication 19, **caractérisé en ce que** lesdits premier et second tambours (111, 112) sont logés dans un corps creux (113) disposé à l'extérieur dudit carter (103) et reliés mécaniquement à celui-ci d'une manière non amovible.

21. Dispositif selon la revendication 19 ou 20, **caractérisé en ce que** lesdits moyens de transmission (108) comprennent un arbre de transmission (130) logé de façon à pouvoir tourner dans un siège associé passant à travers une paroi dudit carter (103) et un engrenage conique (132, 133) pour transmettre une force d'entraînement dudit arbre de transmission (130) audit premier tambour (111).

22. Dispositif selon la revendication 21, **caractérisé en ce que** ledit premier tambour (111) est monté sur un arbre d'entraînement respectif (115) ; ledit engrenage conique comportant une première roue (32) à denture conique montée sur ledit arbre d'entraînement (115) et une seconde roue (113) à denture conique montée sur ledit arbre de transmission (130).

23. Dispositif selon la revendication 21 ou la revendication 22, **caractérisé en ce que** lesdits moyens d'étanchéité comprennent un manchon (135) ajusté à l'intérieur dudit siège (131), passant à travers ladite paroi (104) du carter (103) et accouplé d'une manière étanche aux fluides dans ledit siège (131) ; ledit arbre de transmission (130) étant lui-même monté de façon à pouvoir tourner dans ledit manchon (135).

24. Dispositif selon l'une quelconque des revendications 19 à 23, **caractérisé en ce que** lesdits premier et second tambours (111, 112) sont montés de façon à pouvoir tourner sur des supports respectifs (119, 120) dudit corps creux (113) ; une bobine (125) dudit film (105) étant enroulée sur ledit second tambour (112).

25. Dispositif selon la revendication 24, **caractérisé en ce que** lesdits premier et second tambours (111, 112) sont montés sur des arbres d'entraînement respectifs (115, 116) montés de façon amovible sur des sièges de rotation respectifs (117, 118) formés sur lesdits supports (119, 120).

26. Dispositif selon l'une quelconque des revendications 18 à 25, **caractérisé en ce que** ledit carter (103) et ledit corps creux (113) sont pourvus de connexions à la terre (141, 142).
